# EUROPEAN PATENT SPECIFICATION

(11) **EP 1 498 293 B1**
(45) Date of publication and mention of the grant of the patent: **16.08.2006**
(21) Application number: 03425464.9
(22) Date of filing: 14.07.2003
(51) Int. Cl.: B60H 1/32, B60H 1/00

(54) **Heat exchange assembly to be applied to the roof of an agricultural vehicle**
Wärmetauscheranordnung zur Befestigung auf dem Dach eines landwirtschaftlichen Fahrzeugs
Ensemble échangeur de chaleur monté sur le toit d'un véhicule agricol

(43) Date of publication of application: 19.01.2005
(73) Proprietor: DENSO THERMAL SYSTEMS S.p.A., 10046 Poirino (Torino) (IT)
(72) Inventor: Bertaglia, Silvano, 10046 Poirino (Torino) (IT); Scarrone, Piero, 10046 Poirino (Torino) (IT)
(74) Representative: Marchitelli, Mauro

(56) References cited:
- EP-B- 0 816 143
- WO-A-03/026908
- DE-U- 8 133 960
- DE-U- 20 103 695
- US-A- 6 024 164

## Description

The present invention relates to a heat exchange assembly intended in particular to be applied to the roof of an agricultural machine.

Agricultural machines, such as tractors, harvesters, etc., are destined to operate in environmental conditions that lead to a rapid degradation in the performance of the heat exchangers due to the accumulation of dust, dirt and vegetable residues on the heat exchange surfaces of the radiators. Therefore, when designing and constructing heat exchange assemblies intended to be mounted onto agricultural machines, it is essential to provide for the possibility of cleaning the heat exchange assemblies in a simple, rapid manner.

WO03/026908 discloses a motor vehicle having a fixed ventilation assembly and a movable radiator carried by a support structure articulated in the front part of the vehicle.

DE-U-8133960 discloses a heat exchange assembly according to the preamble of claim 1, including a fixed radiator and a support structure articulated to the roof of a vehicle and carrying two ventilation units.

The present invention aims to provide a heat exchange assembly for an agricultural machine with a reduced number of components and having a structure that facilitates cleaning operations by the user.

According to the present invention, said aim is achieved by a heat exchange assembly having the characteristics set out in claim 1.

The characteristics and the advantages of the present invention shall become readily apparent from the detailed description that follows, provided purely by way of non limiting example, in which:
- Figures 1 and 2 are perspective views of a heat exchange assembly according to the present invention in two positions,
- Figures 3 and 4 are cross sections according to the line III-III of Figure 1, respectively in closed and in open position,
- Figure 5 is a partial cross-section, in enlarged scale, taken along the line V-V of Figure 1, and
- Figures 6 and 7 are sections respectively along the lines VI-VI and VII-VII of Figure 5.

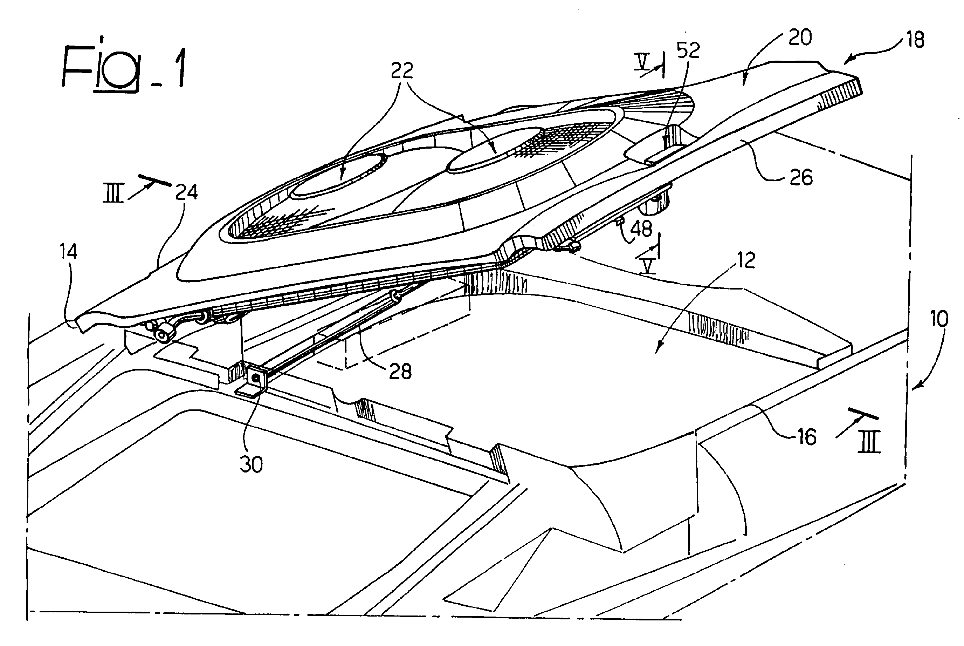

With reference to Figures 1 through 4, the reference number 10 designates the upper part of a cab of an agricultural machine, such as an agricultural tractor, a harvester or the like. The upper part 10 of the cab has a roof 12 with two lateral edges 14, 16.

Still with reference to Figures 1 through 4, the reference number 18 designates a heat exchange assembly according to the present invention. In the example illustrated in the figures, the heat exchange assembly 18 is a condensation assembly for the air conditioning system of the agricultural machine. The heat exchange assembly 18 comprises a support structure 20 having generally rectangular shape, preferably constituted by roto-moulded plastic material. The support structure 20 bears two ventilator assemblies 22, each of which is provided with a fan driven in rotation by an electric motor. The number of ventilator assemblies 22 mounted on the support structure 20 may naturally vary according to the dimensions and to the power of the heat exchange assembly. In general, the support structure 20 will be provided with one or more ventilator assemblies.

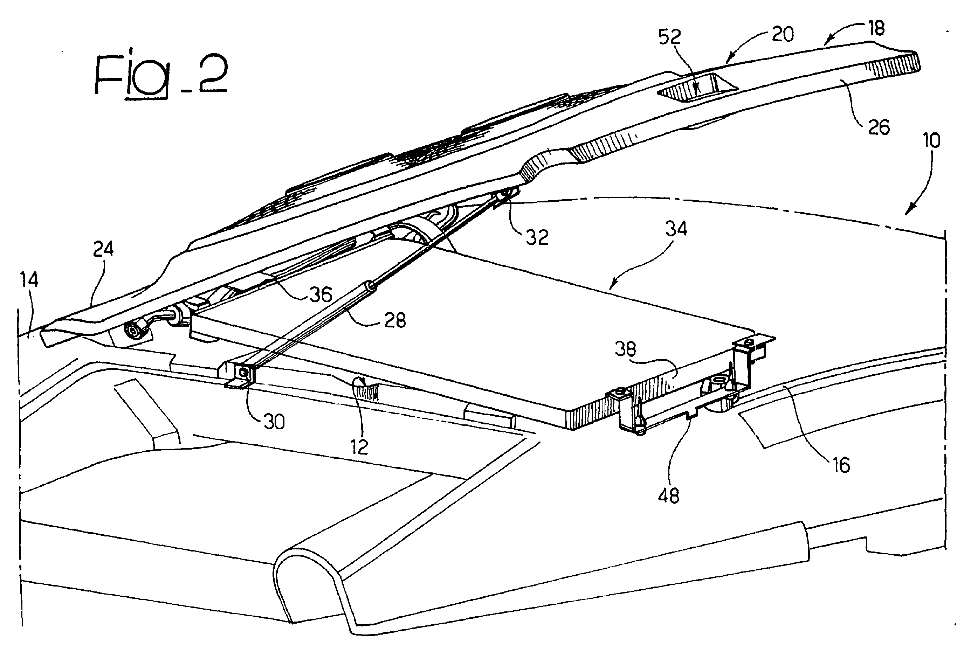

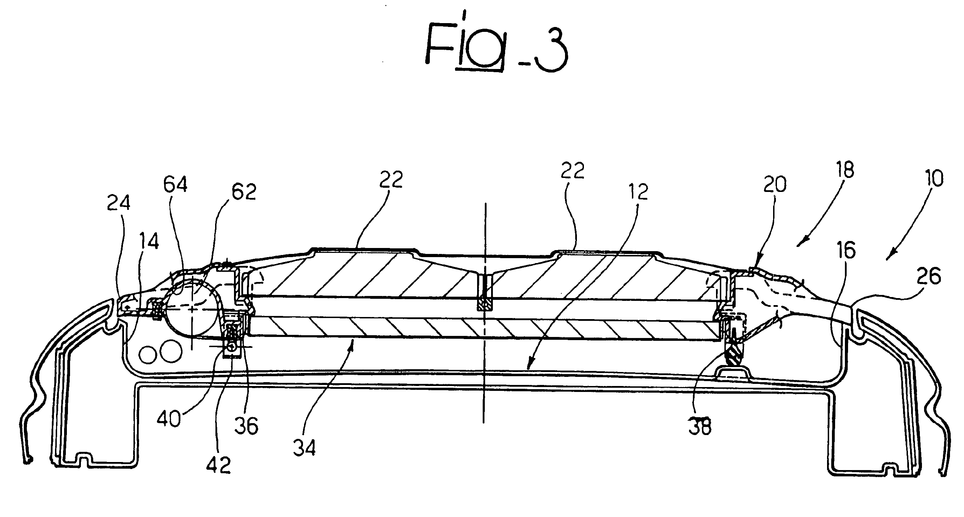

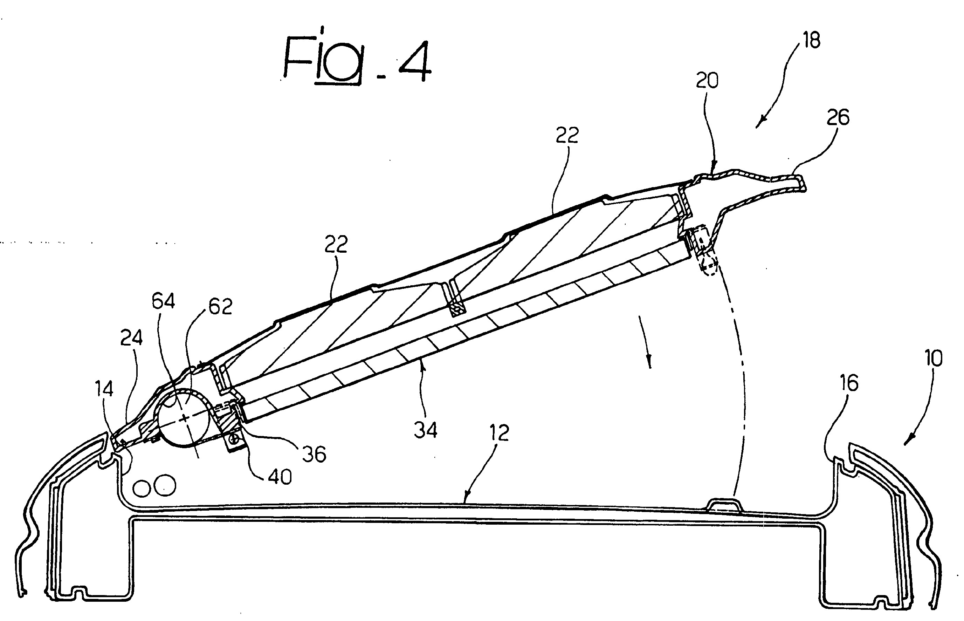

The support structure 20 has two sides 24, 26 parallel to the respective lateral edges 14, 16 of the roof 12. The support structure 20 is articulated to the upper part 10 of the agricultural cab and it is movable between a lowered position shown in Figure 3 and a raised position shown in Figure 4. The axis of articulation between the support structure 20 and the upper part 10 of the cab is preferably situated in correspondence with the side 24 of the structure 20 and of the lateral edge 14 of the roof. The articulated connection between the support structure 20 and the upper part 10 of the car is obtained by means of conventional hinges (not shown). As Figures 1 and 2 show, the support structure 20 is preferably associated to an air spring 28 of the kind normally used to facilitate the opening of the rear doors of vehicles. The air spring 28 has a first end 30 articulated to the cab 10 and a second end 32 articulated to the support structure 20. The air spring 28 facilitates the movement of the support structure 20 from the closed position to the raised position and it also constitutes and end stop which keeps the support structure 20 in the open position with a predetermined opening angle.

The heat exchange assembly 18 comprises at least a heat exchanger 34 which, in the example shown in the figures, is a condenser connected to the cooling circuit of the air conditioning system of the agricultural machine. The condenser 34 has a generically rectangular shape with two parallel sides 36, 38, parallel to the respective sides 24, 26 of the support structure 20.

The heat exchanger 34 is articulated to the support structure 20 about an axis 40 that is orthogonal to the plane of representation of Figures 3 and 4. The axis 40 is parallel to the axis of articulation between the support structure 20 and the cab. The articulated connection between the heat exchanger 34 and the support structure 20 is obtained by means of a pair of hinges, only one of which is visible in Figures 3 and 4 and is schematically designated 42. The axis of articulation 40 is adjacent to the axis of articulation between the support structure 20 and the cab and it is positioned in the immediate vicinity of the side 36 of the heat exchanger 34 and parallel thereto.

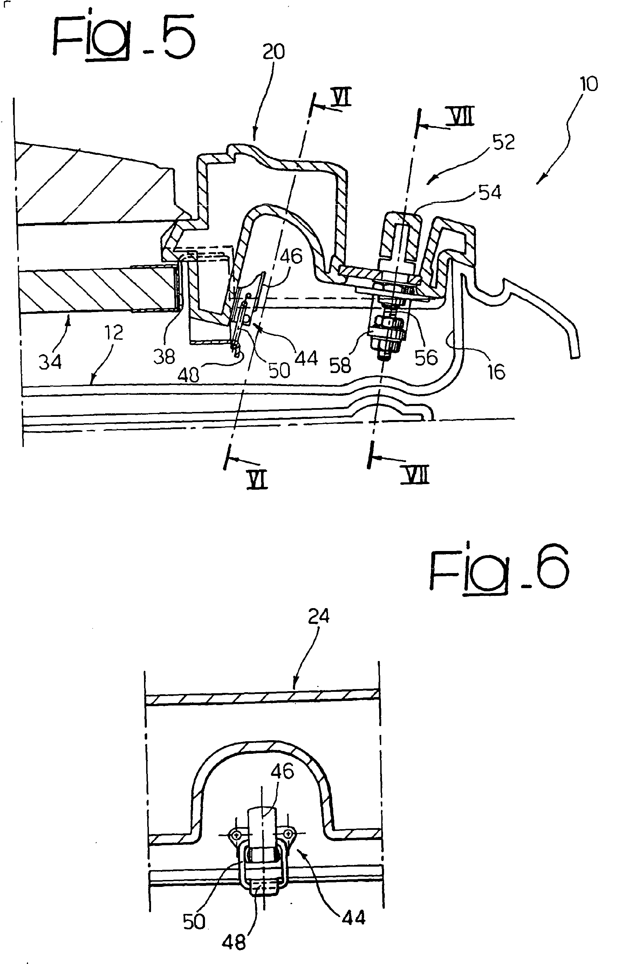

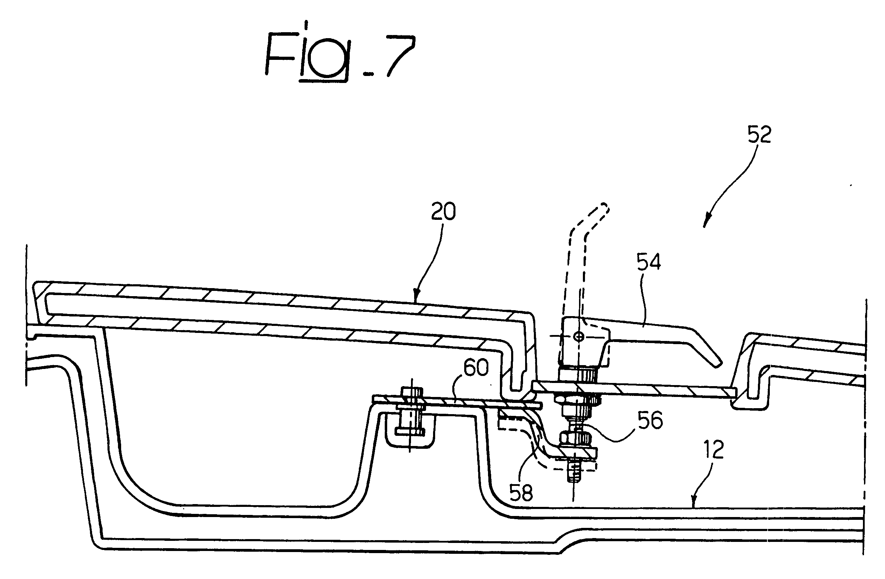

With reference to Figures 5 and 6, the side 38 of the heat exchanger 34, opposite the side 36 adjacent to the axis of articulation 40, is connected to the support structure 20 by means of a disengageable locking device 44. The device 44 shown in Figures 5 and 6 has a toggle-joint lever 46 which engages a hook 48 integral with the heat exchanger by means of a ring 50. The ring 50 can be disengaged from the hook 48 after the opening of the lever 46. When the locking device 44 engages the hook 48, as shown in Figure 5, the heat exchanger 34 extends parallel to the lower face of the support structure 20 and is integral therewith.

With reference to Figures 5 and 7, the support structure 20 is provided with a closure device 52 positioned in proximity to the side 26 of the support structure opposite the side 24 adjacent to the axis of articulation between the support structure 20 and the cab. The closure device shown in Figures 5 and 7 comprises a handle 54 connected to a pivot 56 whereon is fastened a closure organ 58 which co-operates with a wall 60 that is fixed relative to the roof 12. The handle 54 can oscillate about a transverse axis between two positions shown with solid line and with dashed line in Figure 7 to bring the closure organ 58 in contact or in distanced position relative to the fixed wall 60. The handle 54 can also rotate about the pivot axis 56 to disengage the closure element 58 from the wall 60.

The heat exchange assembly 18 further comprises a dehydrator filter 62 borne by the support structure 20 and connected to the condenser 34 by means of flexible tubes. As Figures 3 and 4 show, the dehydrator filter 62 had the shape of a cylindrical container and is housed in a seat 64 of the support structure 20 positioned between the side 36 of the radiator 34 and the side 24 of the support structure 20.

In the configuration shown in Figure 3, the heat exchange assembly is in the closed position. In this configuration, the heat exchanger 34 is engaged to the support structure 20 and the closure device 52 is in the closed position in which it maintains the support structure 20 against the upper part 10 of the cab. To perform cleaning operations on the heat exchange assembly 18, the user opens the closure device 52 rotating the handle 54 and lifts the support structure 20. The raising of the structure 20 is facilitated by the air spring 28, similarly to what takes place for the rear door of a vehicle. In the raised position of the support structure 20 shown in Figures 1 and 4 the user can clean the lower surface of the radiator 34. Hence, the user can disengage the locking device 44 and make the heat exchanger 34 oscillate downwards as shown in Figure 2. In this position, the user can clean the upper surface of the heat exchanger 34.

At the end of the cleaning operations, the user lifts the heat exchanger 34 and engages the locking device 44 to the support structure 20 and subsequently closes the support structure to bring the assembly back to the position Figure 3.

From the above description it is readily apparent that the cleaning operations of the heat exchange assembly 18 are facilitated thanks to the capability of accessing in simple fashion both the surfaces of the heat exchanger 34 without having to disassemble or remove parts of the heat exchange assembly 18. Moreover, with respect to the prior art solutions, the heat exchange assembly 18 enables to obtain a reduction in the number of components and in the costs of production and assembly.

In a variation of the present invention, the heat exchange assembly 18 could be mounted in a different area of the structure of the agriculture machine.

## Claims

1. A heat exchange assembly (18) suitable to be mounted to the roof (12) of an agricultural machine, comprising:
- a support structure (20) bearing at least one ventilator assembly (22) and which, in use, is articulated to the structure of the agricultural machine and is movable between a lowered position and a raised position, and
- at least one heat exchanger (34) facing said support structure (20),
**characterized in that** the heat exchanger has a first side (36) articulated to the support structure (20) and is movable, relative to the support structure (20), between a closed position and an open position the heat exchanger (34) having a second side (38) connected to the support structure (20) by means of a disengageable locking device (44).

2. A heat exchange assembly as claimed in claim 1, wherein the support structure (20) has a generically rectangular shape with two parallel sides (24, 26) and wherein the axis of articulation between the support structure (20) and the structure of the machine (10) is situated in the vicinity of one of said sides (24).

3. A heat exchange assembly as claimed in claim 2, wherein the heat exchanger (24) has a generically rectangular shape with two parallel sides (36, 38) positioned parallel to the respective sides (24, 26) of the support structure (20), and wherein the heat exchanger (34) is articulated to the support structure (20) about an axis (40) that is parallel to the axis of articulation between the support structure (20) and the structure of the machine (10).

4. A heat exchange assembly as claimed in claim 2, wherein the support structure (20) is associated to an air spring (28) able to bias the support structure towards the open position and to delimit the angle of opening of the support structure.

5. A heat exchange assembly as claimed in claim 2, wherein the support structure (20) is provided with a closure device (52) able to lock the support structure (20) in a closed position.

## Patentansprüche

1. Wärmetauscheranordnung (18), die an dem Dach (12) einer landwirtschaftlichen Arbeitsmaschine befestigbar ist, umfassend
- eine Abstützanordnung (20), die wenigstens eine Ventilatorbaueinheit (22) trägt und die in Betriebslage mit dem Aufbau der landwirtschaftlichen Arbeitsmaschine gelenkig verbunden ist und zwischen einer abgesenkten Position und einer angehobenen Position bewegbar ist, und
- wenigstens einen Wärmetauscher (34), der der Abstützanordnung (20) zugewandt ist,
**dadurch gekennzeichnet, dass** der Wärmetauscher eine erste Seite (36) aufweist, die mit der Abstützanordnung (20) gelenkig verbunden und relativ zu der Abstützanordnung (2) zwischen einer Schließpoaition und einer Offenposition beweglich ist, und dass der Wärmetauscher (34) eine zweite Seite (38) aufweist, die mit der Abstützanordnung (20) durch eine lösbare Verriegelungsvorrichtung (44) verbunden ist.

2. Wärmetauscheranordnung gemäß Anspruch 1, wobei die Abstützanordnung (20) eine allgemein rechteckige Form mit zwei parallelen Seiten (24, 26) aufweist und wobei die Gelenkachse zwischen der Abstützanordnung (20) und dem Aufbau der Arbeitsmaschine (10) nahe einer der Seiten (24) angeordnet ist.

3. Wärmetauscheranordnung gemäß Anspruch 2, wobei der Wärmetauscher (24) eine allgemein rechteckige Form mit zwei parallelen Seiten (36, 38) aufweist, die jeweils zu den zugehörigen Seiten (24, 26) der Abstützanordnung parallel angeordnet sind, und wobei der Wärmetauscher (34) mit der Abstützanordnung (20) um eine Achse (40) gelenkig verbunden ist, die parallel zu der Gelenkachse zwischen der Abstützanordnung (20) und dem Aufbau der landwirtschaftlichen Arbeitsmaschine angeordnet ist.

4. Wärmetauscheranordnung gemäß Anspruch 2, wobei die Abstützanordnung (20) einer Luftfeder (28) zugeordnet ist, die die Abstützanordnung zu der Offenposition beaufschlagt und den Öffnungswinkel der Abstützanordnung begrenzt.

5. Wärmetauscheranordnung gemäß Anspruch 2, wobei die Abstützanordnung (20) mit einer Schließvorrichtung (52) versehen ist, um die Abstützanordnung (20) in einer geschlossenen Position zu verriegeln.

## Revendications

1. Ensemble échangeur de chaleur (18) susceptible d'être monté sur le toit (12) d'une machine agricole, comprenant :
- une structure de support (20) portant au moins un ensemble formant ventilateur (22) et qui, en fonctionnement, est articulée sur la structure de la machine agricole et peut passer d'une position abaissée à une position levée, et
- au moins un échangeur de chaleur (34) situé en regard de la structure de support (20),
**caractérisé en ce que** l'échangeur de chaleur présente un premier côté (36) articulé sur la structure de support (20) et est susceptible de passer, par rapport à la structure de support (20), d'une position fermée à une position ouverte, l'échangeur de chaleur (34) présentant un deuxième côté (38) relié à la structure de support (20) par un dispositif de verrouillage (44) susceptible d'être désenclenché.

2. Ensemble échangeur de chaleur selon la revendication 1, dans lequel la structure de support (20) présente une forme généralement rectangulaire avec deux côtés parallèles (24, 26) et dans lequel l'axe d'articulation entre la structure de support (20) et la structure de la machine (10) est situé à proximité de l'un des côtés (24).

3. Ensemble échangeur de chaleur selon la revendication 2, dans lequel l'échangeur de chaleur (24) présente une forme généralement rectangulaire avec deux côtés parallèles (36, 38) placés parallèlement aux côtés respectifs (24, 26) de la structure de support (20), et dans lequel l'échangeur de chaleur (34) est articulé sur la structure de support (20) autour d'un axe (40) qui est parallèle à l'axe de l'articulation entre la structure de support (20) et la structure de la machine (10).

4. Ensemble échangeur de chaleur selon la revendication 2, dans lequel la structure de support (20) est associée à un ressort pneumatique (28) susceptible de pousser la structure de support en direction de la position ouverte et de délimiter l'angle d'ouverture de la structure de support.

5. Ensemble échangeur de chaleur selon la revendication 2, dans lequel la structure de support (20) est équipée d'un dispositif de fermeture (52) susceptible de verrouiller la structure de support (20) en position fermée.
